# EUROPEAN PATENT APPLICATION

(11) **EP 1 334 767 A1**
(43) Date of publication of application: **13.08.2003**
(21) Application number: 03250571.1
(22) Date of filing: 30.01.2003
(51) Int. Cl.: B01J 19/00

(54) **Error correction in array fabrication**

(30) Priority: 30.01.2002 US 61800
(71) Applicant: Agilent Technologies, Inc., Palo Alto, CA 94306 (US)
(72) Inventor: Shchegrove, Svetlana V., Campbell, CA 95008 (US); Fischer, William D., San Jose, CA 95129 (US); Webb, Peter G., Manlo Park, CA 94025 (US)
(74) Representative: Tollett, Ian

(57) **Abstract**

A method, apparatus, and computer program products useful in fabricating a chemical array. The apparatus may include a head system (210), transport system (60,62,100), and a processor (140). The head system (210a,210b) has multiple groups of drop dispensers. The transport system moves the head system with respect to a substrate (10). The processor (140) dispenses drops from dispensers during operation of the transport system, in a pattern along a selected path for each group. The method, apparatus, and computer program products provide a means by which error dispensers can readily be replaced by redundant non-error dispensers loaded with the same fluid.

## Description

This invention relates to a method and apparatus for fabricating a chemical array, particularly polynucleotide arrays such as DNA arrays, which are useful in diagnostic, screening, gene expression analysis, and other applications.

Polynucleotide arrays (such as DNA or RNA arrays), are known and are used, for example, as diagnostic or screening tools. Such arrays include regions of usually different sequence polynucleotides arranged in a predetermined configuration on a substrate. These regions (sometimes referenced as "features") are positioned at respective locations ("addresses") on the substrate. The arrays, when exposed to a sample, will exhibit an observed binding pattern. This binding pattern can be detected upon interrogating the array. For example all polynucleotide targets (for example, DNA) in the sample can be labeled with a suitable label (such as a fluorescent compound), and the fluorescence pattern on the array accurately observed following exposure to the sample. Assuming that the different sequence polynucleotides were correctly deposited in accordance with the predetermined configuration, then the observed binding pattern will be indicative of the presence and/or concentration of one or more polynucleotide components of the sample. Biopolymer arrays can be fabricated by depositing previously obtained biopolymers (such as from synthesis or natural sources) onto a substrate, or by *in situ* synthesis methods. Methods of depositing obtained biopolymers include dispensing droplets to a substrate from dispensers such as pin or capillaries (such as described in US 5,807,522) or such as pulse jets (such as a piezoelectric inkjet head, as described in PCT publications WO 95/25116 and WO 98/41531, and elsewhere). The substrate is coated with a suitable linking layer prior to deposition, such as with polylysine or other suitable coatings as described, for example, in U.S. Patent 6,077,674 and the references cited therein.

For *in situ* fabrication methods, multiple different reagent droplets are deposited from drop dispensers at a given target location in order to form the final feature (hence a probe of the feature is synthesized on the array stubstrate). The *in situ* fabrication methods include those described in US 5,449,754 for synthesizing peptide arrays, and described in WO 98/41531 and the references cited therein for polynucleotides. The *in* *situ* method for fabricating a polynucleotide array typically follows, at each of the multiple different addresses at which features are to be formed, the same conventional iterative sequence used in forming polynucleotides from nucleoside reagents on a support by means of known chemistry. This iterative sequence is as follows: (a) coupling a selected nucleoside through a phosphite linkage to a functionalized support in the first iteration, or a nucleoside bound to the substrate (i.e. the nucleoside-modified substrate) in subsequent iterations; (b) optionally, but preferably, blocking unreacted hydroxyl groups on the substrate bound nucleoside; (c) oxidizing the phosphite linkage of step (a) to form a phosphate linkage; and (d) removing the protecting group ("deprotection") from the now substrate bound nucleoside coupled in step (a), to generate a reactive site for the next cycle of these steps. The functionalized support (in the first cycle) or deprotected coupled nucleoside (in subsequent cycles) provides a substrate bound moiety with a linking group for forming the phosphite linkage with a next nucleoside to be coupled in step (a). Final deprotection of nucleoside bases can be accomplished using alkaline conditions such as ammonium hydroxide, in a known manner.

The foregoing chemistry of the synthesis of polynucleotides is described in detail, for example, in Caruthers, Science 230: 281-285, 1985; Itakura et al., Ann. Rev. Biochem . 53: 323-356; Hunkapillar et al., Nature 310: 105-110, 1984; and in "Synthesis of Oligonucleotide Derivatives in Design and Targeted Reaction of Oligonucleotide Derivatives", CRC Press, Boca Raton, Fla., pages 100 et seq., US 4,458,066, US 4,500,707, US 5,153,319, US 5,869,643, EP 0294196, and elsewhere. Suitable linking layers on the substrate include those as described in US 6,235,488 and 6,258,454 and the references cited therein.

Further details of fabricating biopolymer arrays by depositing either previously obtained biopolymers or by the *in situ* method are disclosed in US 6,242,266, US 6,232,072, US 6,180,351, and US 6,171,797.

In array fabrication, the quantities of polynucleotide available, whether by deposition of previously obtained polynucleotides or by *in situ* synthesis, are usually very small and expensive. Additionally, sample quantities available for testing are usually also very small and it is therefore desirable to simultaneously test the same sample against a large number of different probes on an array. These conditions require use of arrays with large numbers of very small, closely spaced features. It is important in such arrays that features actually be present, that they are put down accurately in the desired target pattern, are of the correct size, and that the DNA is uniformly coated within the feature. Failure to meet such quality requirements can have serious consequences to diagnostic, screening, gene expression analysis or other purposes for which the array is being used. However, for economical mass production of arrays with many features it is desirable that they can be fabricated in a short time while maintaining quality.

The present invention then, recognizes that in fabricating arrays using multiple drop dispensers which move in relation to a substrate to deposit drops, one or more dispensers may be in error. However, array quality can still be maintained by providing one or more redundant dispensers and an efficient way of using redundant dispensers in place of error dispensers.

Accordingly, the present invention provides, in one aspect, a method of fabricating a chemical array using a head system with multiple groups of drop dispensers, a transport system to move the head system with respect to a substrate, a processor to dispense droplets from dispensers during operation of the transport system, in a pattern along a selected path for each group. The method includes loading the dispensers with fluid such that each dispenser group has at least one set of redundant dispensers loaded with a same fluid. Drops are dispensed to identify an error in one or more dispensers. Such identification may, for example, be based on data specifically identifying an error dispenser (such as operator input data) or upon data received from a sensor which monitors dispensers for an error and provides corresponding data to the processor (in which case the processor can identify an error from the received data). When a dispenser of a first group is in error, a second dispenser of the sets in each group is moved along the selected path for that group while dispensing drops from a non-error second dispenser of a set having an identified error first dispenser, in at least part of the pattern for the selected path of the first group. A first dispenser of each set in each group may additionally be moved along the selected path for that group while dispensing drops from non-error first dispensers of the sets in at least part of the pattern along the selected path for each group. The foregoing procedure (loading, identifying, and dispensing) is repeated at least once, and the array is fabricated as a result of the method. Of course, it will be understood that to complete the array further dispensers may also be used in the sets of each group, in the same manner as the second dispensers. During the moving of the second dispenser of the sets, drops may be dispensed from each second dispenser of multiple groups in at least part of the pattern for the selected path of the same group. In one configuration, dispensers within each set of redundant dispensers may communicate with a common reservoir for that set. Drops may be dispensed from at least one second dispenser of a set of redundant dispensers, in the complete pattern for the first dispenser of the same set.

In another aspect the method uses an apparatus having a head system with multiple groups of dispensers, the members of each group being arranged in multiple series extending in a first direction and multiple sets. The apparatus may also include a transport system to move the head system with respect to a substrate with different series following respective paths, series from different groups which can simultaneously move along the selected paths for their groups forming a dispenser frame. A processor may also present to dispense drops from dispensers during operation of the transport system, in a pattern along a selected path for each group. The method in this aspect may include loading the dispensers with fluid such that dispensers within each set of the groups are loaded with a same fluid. Drops are dispensed from the dispensers to identify an error in one or more dispensers. A first dispenser frame is moved along the selected paths for the groups while dispensing drops from non-error dispensers of the first frame in at least part of the patterns along the selected paths for the groups. When an error dispenser is detected in the first frame, a further frame may be moved along the selected paths for the groups while dispensing drops from a non-error dispenser of the further frame located in the same set as the error dispenser, in at least part of the patterns along the selected paths for the groups. The foregoing sequence may be repeated at least once, and the array fabricated. Alternatively, when an error dispenser is detected in the first frame, then multiple frames may be moved along the selected paths for the groups while dispensing drops from non-error dispensers of each of the frames in at least part of the patterns along the selected paths for the groups. In this case, each of the frames so moved are selected as the frame among previously non-selected frames which has the highest number of non-error dispensers in sets not containing a non-error dispenser in a previously selected frame. Of course, it will be understood that multiple further frames may be used to complete the array, as discussed further below.

In a method of the present invention, the selected paths extend in the first direction, and the dispensers of the head system move in unison (as, for example, by being part of a unitary head system). First and further frames may be moved in turn (that is, one after the other) along the selected paths. Each frame may be brought into alignment with the selected paths by a sideways displacement of the head system in the case where the sets are arranged sideways to the first direction. Each frame may be selected based on the number of non-error dispensers in the first frame. In a particular case, each frame may be selected as a frame among previously non-selected frames which has the highest number of non-error dispensers in sets not containing a non-error dispenser in a previously selected frame. In situations when more than one frame has the highest number, then the selected frame may be that frame among such highest number frames which has a best non-error dispenser in a set not containing a non-error dispenser in a previously selected frame, wherein the best non-error dispenser more closely meets a predetermined criterion than a non-error dispenser of another highest number frame. The method may optionally also include, when a set contains a non-error dispenser in more than one selected frame, then determining a best dispenser from among those non-error dispensers which more closely meets a predetermined criterion and dispensing drops in at least part of the pattern along the selected path for that group in which that best dispenser is located when the frame containing that best dispenser is moved along the selected path for that group. The predetermined criterion in either of the foregoing situations may, for example, be the drop size, shape, or location, on the substrate. In any of the methods the dispensing to identify errors in the dispensers may be performed (for example, in a test deposition area separate from the array) after each of multiple loadings of the head system and before the moving and dispensing to deposit drops in the formation of an array.

The present invention further provides an apparatus for fabricating a chemical array. The apparatus includes a head system and transport system, of any of the constructions as described above. The apparatus may further include a processor which coordinates dispensing of droplets and movement of the deposition system, in accordance with one or more methods of the present invention.

The present invention further provides a computer program product for use with an apparatus as described above, and which provides the instructions to the processor such that it can cause the head system and transport system to execute one or more methods of the present invention. The program product includes a computer readable storage medium having a computer program stored thereon which,when loaded into a computer (which is a "processor"), causes it to perform the steps required of it in such that the apparatus can perform a method of the present invention. Optionally, the present invention may further provide for exposing the array to a sample, and reading the array following the exposure and optionally processing results from the reading. Results (processed or not) may be forwarded to a remote location.

In one aspect of the present invention there is provided a method of fabricating a chemical array using:
a head system with multiple groups of dispensers, the members of each group being arranged in multiple series extending in a first direction and multiple sets;
a transport system to move the head system with respect to a substrate with different series following respective paths, series from different groups which can simultaneously move along the selected paths for their groups forming a dispenser frame;
a processor to dispense drops from dispensers during operation of the transport system, in a pattern along a selected path for each group;
the method comprising:
a) loading the dispensers with fluid such that dispensers within each set of the groups are loaded with a same fluid;
b) dispensing drops from the dispensers to identify an error in one or more dispensers;
c) moving a first dispenser frame along the selected paths for the groups while dispensing drops from non-error dispensers of the first frame in at least part of the patterns along the selected paths for the groups;
d) when an error dispenser is detected in the first frame, moving a further frame along the selected paths for the groups while dispensing drops from a non-error dispenser of the further frame located in the same set as the error dispenser, in at least part of the patterns along the selected paths for the groups; and
e) repeating (a) through (d) at least once;
wherein the array is fabricated.

The multiple sets may extend in a second direction sideways to the first direction

The selected paths may extend in the first direction.

The dispensers of the head system preferably move in unison.

The first and further dispenser frames are preferably moved in turn along the selected paths.

The head may be displaced sideways to the selected paths to bring each further frame into alignment with the selected paths.

The first frame is preferably selected based on the number of non-error dispensers in the first frame.

In a preferred embodiment, in step (d) when error dispensers are detected in a further frame, then multiple further frames are moved along the selected paths for the groups while dispensing drops from non-error dispensers of each of the further frames in at least part of the patterns along the selected paths for the groups.

Drops may be dispensed from non-error dispensers in the same sets as the error dispensers.

In steps (c) and (d) frames so moved are preferably each selected as a frame among previously non-selected frames which has the highest number of non-error dispensers in sets not containing a non-error dispenser in a previously selected frame.

When more than one frame has the highest number then the method preferably comprises selecting from among such highest number frames a frame which has a best non-error dispenser in a set not containing a non-error dispenser in a previously selected frame, wherein the best non-error dispenser more closely meets a predetermined criterion than a non-error dispenser of another highest number frame.

When a set contains a non-error dispenser in more than one selected frame, then the method may comprise determining a best dispenser from among those non-error dispensers which more closely meets a predetermined criterion and dispensing drops in at least part of the pattern along the selected path for that group in which that best dispenser is located when the frame containing that best dispenser is moved along the selected path for that group.

The predetermined criterion is preferably a drop size or a drop placement.

The dispensers may be pulse jets.

Dispensers in each of multiple sets of each of multiple groups preferably communicate with a corresponding common reservoir for that column.

The dispensing of (b) is preferably performed after each loading in (a) and before the moving and dispensing of (c) and (d).

The series are preferably arranged in rows.

The sets are preferably arranged in columns.

In a further aspect of the invention there is provided a method of fabricating a chemical array using:
a head system with multiple groups of dispensers, the members of each group being arranged in multiple series extending in a first direction and multiple sets extending in a second direction sideways to the first direction;
a transport system to move the head system with respect to a substrate with different series following respective paths, series from different groups which can simultaneously move along the selected paths for their groups forming a dispenser frame;
a processor to dispense drops from dispensers during operation of the transport system, in a pattern along a selected path for each group;
the method comprising:
a) loading the dispensers with fluid such that dispensers within each set of the groups are loaded with a same fluid;
b) dispensing drops from the dispensers to identify an error in one or more dispensers;
c) moving a first frame along the selected paths for the groups while dispensing drops from non-error dispensers of the first frame in at least part of the patterns along the selected paths for the groups; and
d) when an error dispenser is detected in the first frame, then multiple selected frames are moved along the selected paths for the groups while dispensing drops from non-error dispensers of each of the frames in at least part of the patterns along the selected paths for the groups, wherein each of the frames so moved is selected as the frame among previously non-selected frames which has the highest number of non-error dispensers in sets not containing a non-error dispenser in a previously selected frame;
   wherein the array is fabricated.

In a further aspect of the invention there is provided an apparatus for fabricating a chemical array, comprising:
(a) a head system with multiple groups of dispensers, the members of each group being arranged in multiple series extending in a first direction and in multiple sets extending sideways to the first direction;
(b) a transport system to move the head system with respect to a substrate with different series following respective paths, series from different groups which can simultaneously move along the selected paths for their groups forming a dispenser frame;
(c) a processor: which:
   i) loads the dispensers with fluid such that dispensers within each set of the groups are loaded with a same fluid;
   ii) dispenses drops from the dispensers to identify an error in one or more dispensers;
   iii) moves a first dispenser frame along the selected paths for the groups while dispensing drops from non-error dispensers of the first frame in at least part of the patterns along the selected paths for the groups;
   iv) when an error dispenser is detected in the first frame, moves a further frame along the selected paths for the groups while dispensing drops from a non-error dispenser of the further frame located in the same column as the error dispenser, in at least part of the patterns along the selected paths for the groups;
   v) repeats (i) through (iv) at least once;
such that the array is fabricated.

The various aspects of the present invention can provide any one or more of the following and/or other useful benefits. For example, a way of compensating for a dispenser error is provided while still keeping the number of different movements of the head system relatively low.

Embodiments of the invention will now be described with reference to the drawings, in which:
FIG. 1 illustrates a substrate carrying multiple arrays, such as may be fabricated by methods of the present invention;
FIG. 2 is an enlarged view of a portion of FIG. 1 showing ideal spots or features;
FIG. 3 is an enlarged illustration of a portion of the substrate in FIG. 2;
FIGS. 4 and 5 schematically illustrate movement of a head system as part of the method of the present invention;
FIG. 6 schematically illustrates movement of another head system as part of the method of the present invention;
FIG. 7 illustrates a test drop deposition pattern from the operation of the head system in FIG. 6;
FIG. 8 is a flowchart illustrating a method of the present invention; and
FIG. 9 is a schematic diagram of an apparatus of the present invention which can execute a method of the present invention.

To facilitate understanding, the same reference numerals have been used, where practical, to designate elements that are common to the figures.

In the present application, unless a contrary intention appears, the following terms refer to the indicated characteristics. A "biopolymer" is a polymer of one or more types of repeating units. Biopolymers are typically found in biological systems and particularly include polysaccharides (such as carbohydrates), and peptides (which term is used to include polypeptides, and proteins whether or not attached to a polysaccharide) and polynucleotides as well as their analogs such as those compounds composed of or containing amino acid analogs or non-amino acid groups, or nucleotide analogs or non-nucleotide groups. This includes polynucleotides in which the conventional backbone has been replaced with a non-naturally occurring or synthetic backbone, and nucleic acids (or synthetic or naturally occurring analogs) in which one or more of the conventional bases has been replaced with a group (natural or synthetic) capable of participating in Watson-Crick type hydrogen bonding interactions. Polynucleotides include single or multiple stranded configurations, where one or more of the strands may or may not be completely aligned with another. A "nucleotide" refers to a sub-unit of a nucleic acid and has a phosphate group, a 5 carbon sugar and a nitrogen containing base, as well as functional analogs (whether synthetic or naturally occurring) of such sub-units which in the polymer form (as a polynucleotide) can hybridize with naturally occurring polynucleotides in a sequence specific manner analogous to that of two naturally occurring polynucleotides. For example, a "biopolymer" includes DNA (including cDNA), RNA, oligonucleotides, and PNA and other polynucleotides as described in US 5,948,902 and references cited therein (all of which are incorporated herein by reference), regardless of the source. An "oligonucleotide" generally refers to a nucleotide multimer of about 10 to 100 nucleotides in length, while a "polynucleotide" includes a nucleotide multimer having any number of nucleotides. A "biomonomer" references a single unit, which can be linked with the same or other biomonomers to form a biopolymer (for example, a single amino acid or nucleotide with two linking groups one or both of which may have removable protecting groups). A "peptide" is used to refer to an amino acid multimer of any length (for example, more than 1, 10 to 100, or more amino acid units). A biomonomer fluid or biopolymer fluid refers to a liquid containing either a biomonomer or biopolymer, respectively (typically in solution).

A "pulse jet" is a device which can dispense drops in the formation of an array. Pulse jets operate by delivering a pulse of pressure (such as by a piezoelectric or thermoelectric element) to liquid adjacent an outlet or orifice such that a drop will be dispensed therefrom. When the arrangement, selection, and movement of "dispensers" is referenced herein, it will be understood that this refers to the point from which drops are dispensed from the dispensers (such as the outlet orifices of pulse jets). A "drop" in reference to the dispensed liquid does not imply any particular shape, for example a "drop" dispensed by a pulse jet only refers to the volume dispensed on a single activation. A drop which has contacted a substrate is often referred to as a "deposited drop" or the like, although sometimes it will be simply referenced as a drop when it is understood that it was previously deposited. Detecting a drop "at" a location, includes the drop being detected while it is traveling between a dispenser and that location, or after it has contacted that location (and hence may no longer retain its original shape) such as capturing an image of a drop on the substrate after it has assumed an approximately circular shape of a deposited drop.

A "set" or "sub-set" of any item (such as a set of dispensers) may contain only one of the item, or only two, or three, or any number of multiple items. An "array", unless a contrary intention appears, includes any one, two or three dimensional arrangement of addressable regions bearing a particular chemical moiety to moieties (for example, biopolymers such as polynucleotide sequences) associated with that region. An array is "addressable" in that it has multiple regions of different moieties (for example, different polynucleotide sequences) such that a region (a "feature" or "spot" of the array) at a particular predetermined location (an "address") on the array will detect a particular target or class of targets (although a feature may incidentally detect non-targets of that feature). Array features are typically, but need not be, separated by intervening spaces. In the case of an array, the "target" will be referenced as a moiety in a mobile phase (typically fluid), to be detected by probes ("target probes") which are bound to the substrate at the various regions. However, either of the "target" or "target probes" may be the one which is evaluated by the other (thus, either one could be an unknown mixture of polynucleotides to be evaluated by binding with the other). An "array layout" refers collectively to one or more characteristics of the features, such as feature positioning, one or more feature dimensions, and some indication of a moiety at a given location. "Hybridizing" and "binding", with respect to polynucleotides, are used interchangeably.

A "frame" of dispensers is merely a shorthand way of designating series of dispensers from different groups of dispensers in a head system, which can simultaneously move along the selected paths for their groups forming a dispenser frame. For example, where the series are lines, the lines from each group which simultaneously move along the selected paths for their groups, form a frame. A head system may have more than one frame.

When one item is indicated as being "remote" from another, this is referenced that the two items are at least in different buildings, and may be at least one mile, ten miles, or at least one hundred miles apart. "Communicating" information references transmitting the data representing that information as electrical signals over a suitable communication channel (for example, a private or public network). "Forwarding" an item refers to any means of getting that item from one location to the next, whether by physically transporting that item or otherwise (where that is possible) and includes, at least in the case of data, physically transporting a medium carrying the data or communicating the data.

It will also be appreciated that throughout the present application, that words such as "top", "upper", and "lower" are used in a relative sense only. "Fluid" is used herein to reference a liquid. Reference to a singular item, includes the possibility that there are plural of the same items present. Furthermore, when one thing is "moved", "moving", "re-positioned", "scanned", or the like, with respect to another, this implies relative motion only such that either thing or both might actually be moved in relation to the other. For example, when dispensers are "moved" relative to a substrate, either one of the dispensers or substrate may actually be put into motion by the transport system while the other is held still, or both may be put into motion. All patents and other cited references herein, are incorporated into this application by reference except insofar as any may conflict with the present application (in which case the present application prevails).

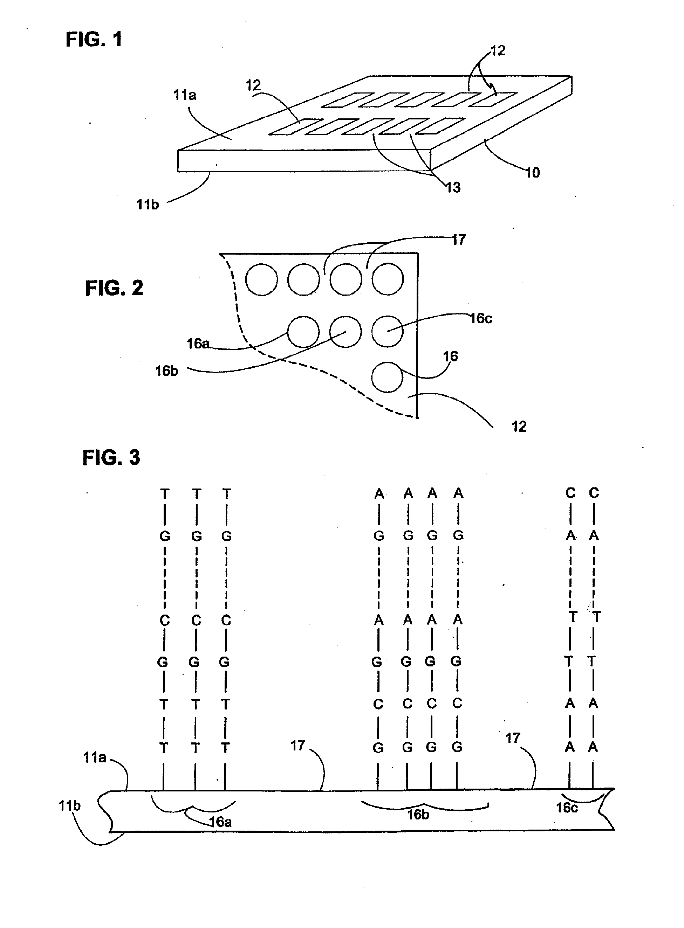

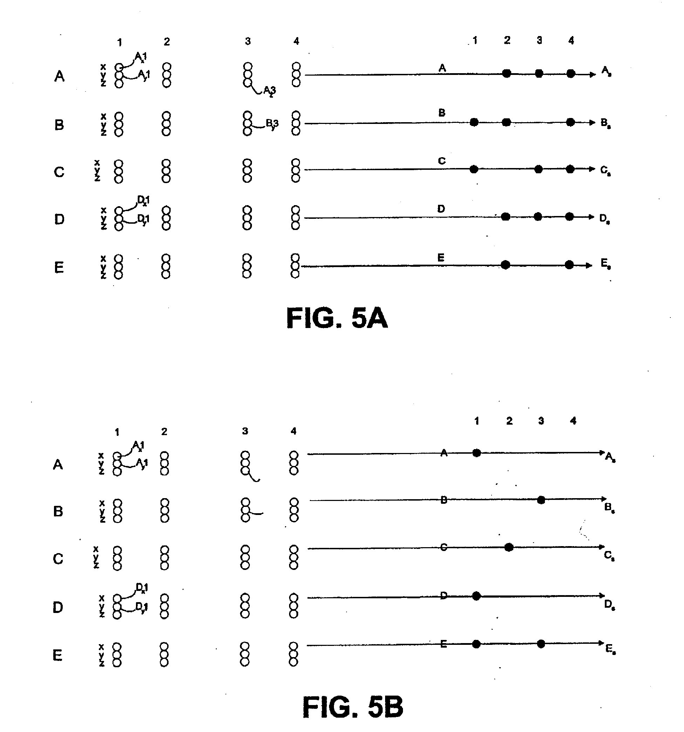

Referring first to FIGS. 1-3, typically methods and apparatus of the present invention generate or use a contiguous planar substrate 10 carrying one or more arrays 12 disposed across a front surface 11a of substrate 10 and separated by inter-array areas 13. A back side 11b of substrate 10 does not carry any arrays 12. The arrays on substrate 10 can be designed for testing against any type of sample, whether a trial sample, reference sample, a combination of them, or a known mixture of polynucleotides (in which latter case the arrays may be composed of features carrying unknown sequences to be evaluated). While ten arrays 12 are shown in FIG. 5 and the different embodiments described below may use substrates with particular numbers of arrays, it will be understood that substrate 10 and the embodiments to be used with it, may use any number of desired arrays 12. Similarly, substrate 10 may be of any shape, and any apparatus used with it adapted accordingly. Depending upon intended use, any or all of arrays 12 may be the same or different from one another and each will contain multiple spots or features 16 of biopolymers in the form of polynucleotides. A typical array may contain from more than ten, more than one hundred, more than one thousand or ten thousand features, or even more than from one hundred thousand features. All of the features 16 may be different, or some could be the same (for example, when any repeats of each feature composition are excluded the remaining features may account for at least 5%, 10%, or 20% of the total number of features). In the case where arrays 12 are formed by the conventional *in situ* or deposition of previously obtained moieties, as described above, by depositing for each feature a droplet of reagent in each cycle such as by using a pulse jet such as an inkjet type head, interfeature areas 17 will typically be present which do not carry any polynucleotide. It will be appreciated though, that the interfeature areas 17 could be of various sizes and configurations. It will also be appreciated that there need not be any space separating arrays 12 from one another. Each feature carries a predetermined polynucleotide (which includes the possibility of mixtures of polynucleotides). As per usual, A, C, G, T represent the usual nucleotides. It will be understood that there may be a linker molecule (not shown) of any known types between the front surface 1 1a and the first nucleotide.

Features 16 can have widths (that is, diameter, for a round spot) in the range from a minimum of about 10 µm to a maximum of about 1.0 cm. In embodiments where very small spot sizes or feature sizes are desired, material can be deposited according to the invention in small spots whose width is in the range about 1.0 µm to 1.0 mm, usually about 5.0 µm to 500 µm, and more usually about 10 µm to 200 µm. Spot sizes can be adjusted as desired, by using one or a desired number of pulses from a pulse jet to provide the desired final spot size. Features which are not round may have areas equivalent to the area ranges of round features 16 resulting from the foregoing diameter ranges. The probes of features 16 are typically linked to substrate 10 through a suitable linker, not shown.

Each array 12 may cover an area of less than 100 cm², or even less than 50, 10 or 1 cm². In many embodiments, substrate 10 will be shaped generally as a rectangular solid (although other shapes are possible), having a length of more than 4 mm and less than 1 m, usually more than 4 mm and less than 600 mm, more usually less than 400 mm; a width of more than 4 mm and less than 1 m, usually less than 500 mm and more usually less than 400 mm; and a thickness of more than 0.01 mm and less than 5.0 mm, usually more than 0.1 mm and less than 2 mm and more usually more than 0.2 and less than 1 mm.

For the purposes of the discussions below, it will be assumed (unless the contrary is indicated) that the array being formed in any case is a polynucleotide array formed by the deposition of previously obtained polynucleotides using pulse jet deposition units. However, the applicability of the method to arrays of other polymers or chemical moieties generally, whether formed by multiple cycle *in situ* methods or deposition of previously obtained moieties, or using other types of dispensers, will be understood from these discussions.

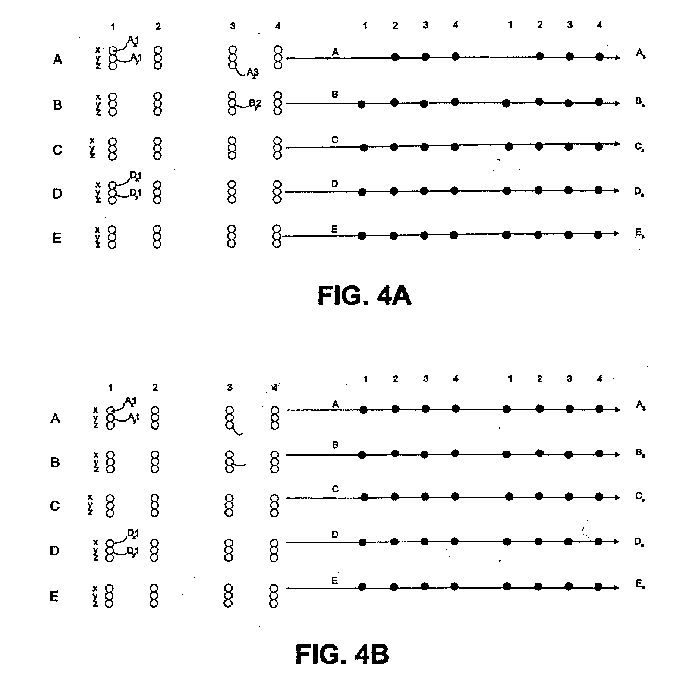

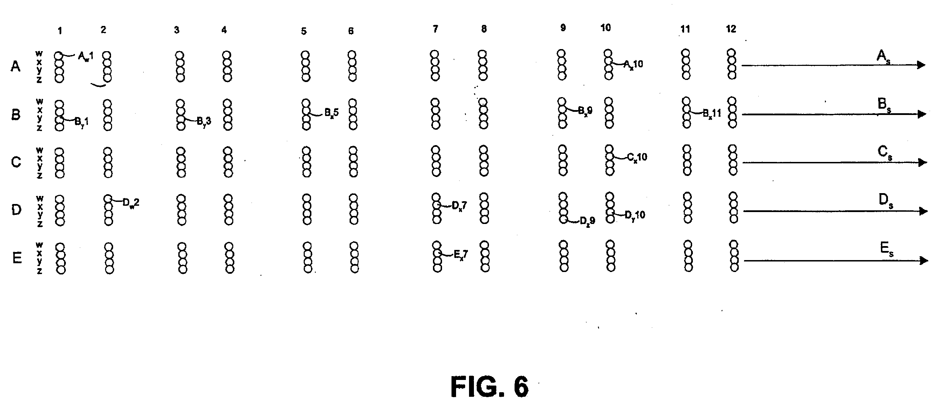

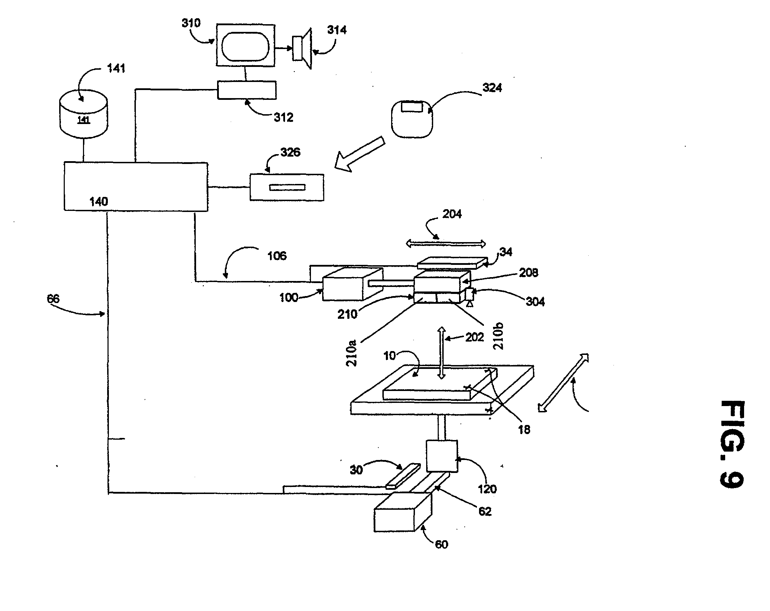

Referring to FIG. 4, movement of a head system as part of a method of the present invention is illustrated. FIG. 4 is a view from above looking down toward a head system 210 (see FIG. 5) and substrate 10 (not shown in FIG. 4 for clarity) beneath the head system and onto which an array is to be fabricated. Head system 210 has two heads 210a and 210b. In FIG. 4 each head 210a and 210b is illustrated with fifteen straight parallel rows and two straight columns (all parallel) of dispensers. However, as described below in connection with FIGS. 6 and 9, each head may in practice have many more rows and columns although the number of rows and columns have been kept low in FIGS. 4 and 5 for the purposes of clarity. Each dispenser is illustrated by its drop dispensing outlet (the drop outlet orifice, for example, in a corresponding pulse jet) represented by a hollow circle in FIG. 4. Deposited droplets are represented by solid black circles. Since, as described below in connection with FIG. 9, heads 210a and 210b are both mounted to the same head retainer 208, all drop dispensers will be moved in unison by the transport system (see FIG. 9). These drop dispensers are identified as groups A, B, C, D, and E in FIG. 4, each group having respective three series of dispensers in the form of rows x, y, and z (extending along a first direction), in four columns 1, 2, 3, and 4. It will be understood though, that it is possible that each group may have only one column of dispensers (that is, each group may have only three dispensers). The center to center spacing of rows of dispensers within a group, is equal for all groups. In the discussion of FIGS. 4 and 5, any particular drop dispenser will be referenced by its group number, followed by row and column number. For example, drop dispenser A_{y}1 refers to the dispenser in group A, row y, column 1, and drop dispenser B_{y}2 refers to the drop dispenser in group B, row y, column 2. Each group A, B, C, D, E has four sets of dispensers, each set being the three dispensers arranged to extend sideways to the first direction (specifically in a column formation within each group). For example, dispensers Aₓ1, A_{y}1 and A_{z}1 together constitute a set, while Bₓ1, B_{y}1, B_{z}1 and Aₓ2, A_{y}2, A_{z}2 constitute two further sets. Thus, in general throughout the FIGS., a set of dispensers are those with the same group and column identification (for example, dispensers with A1 in their designation are in the same set). Dispensers of each set communicate with a common reservoir for that set and thus in operation dispensers of a same set are loaded with the same fluid, as described below. Dispensers within a set are therefore redundant in that one can be used in place of the other during the array fabrication (assuming the one used in place is functioning and is not in error in some way).

In the following discussion row y in each group will be regarded as a first row, with row x being a second row in each group (and row z being a third row). However, designation of rows as "first", "second", "third", and the like is merely an arbitrary naming for identification purposes only and does not imply that the rows are in the physical sequence of first, second and third one after the other. Nor does such naming imply that during operation of the method the "first" row should dispense drops first, followed by the "second" row. Instead, the order of dispensing from the rows may be in any convenient order with, for example, the "second" row dispensing drops before the "first" row. However the identification of rows implies that when a given named row of one group is aligned for movement along a selected path Aₛ through Eₛ for that group, the same named rows of the other groups are simultaneously aligned for movement along the respective selected paths for their groups. Rows that can be simultaneously aligned with the selected paths Aₛ through Eₛ, are collectively referenced as a frame. For example, when row y of group A is moved along the selected path Aₛ for group A, the row y of groups B, C, D, and E will also be simultaneously be aligned with, and moved, along the selected paths of their respective groups. The five rows "y" therefore form a "frame" (referenced as the "Y frame" or "frame Y"). Similarly, the five rows "x" form another frame while the five rows "z" form a further "frame" (respectively referenced as the X and Z frames). Dispensing of all droplets in the required pattern along all selected paths will result in at least a portion of the target array. Similarly, reference to a group as the "first", "second", or the like, is an arbitrary designation only, and does not imply that the groups are in any sequence spatially with respect to one another.

In FIG. 4 when the transport system moves head system 210 (shown in FIG. 5) in a straight line in the direction of any of parallel paths Aₛ through Eₛ, the different rows of dispensers will follow respective parallel paths across the substrate which extend in the first direction. However, during operation of the transport system processor 140 (FIG. 9) only dispenses droplets from dispensers (by controlling dispenser operation) in a pattern along the selected path Aₛ through Eₛ for each group. The selected path are those which will form the array when drops are dispensed therealong in the required pattern. The patterns are selected (by an operator or processor 140) based on the layout of the arrays to be fabricated. One such simple pattern is to have all dispensers of a frame dispense a drop while the head system 210 is at one location in relation to substrate 10, then displace head system 210 and repeat as needed. Other patterns are described, for example, in U.S. patent application Serial No. 09/629500 for "Array Fabrication" filed July 31, 2000. Only one non-error dispenser in each set is needed during array fabrication. In FIG. 4A head system 210 has initially been positioned so that a first frame Y is aligned with the selected paths Aₛ through Eₛ (that is, the rows of frame Y will be moved along paths Aₛ through Eₛ upon activation of the transport system). However, processor 140 has identified an error in a row y of the first group A while no errors have been identified in any of the dispensers of the x rows. That is, a dispenser of a first frame, in this case frame Y, is in error. Specifically dispenser A_{y}1 does not dispense a droplet when required to do so. With the position of head system 210 shown in FIG. 4A, if two repetitions of dispensing from head system 210 were to be performed during operation of the transport system using frame Y, the result would be an array shown in FIG. 4A with two sets of deposited drops (each having columns 1-4) and in which no drops were deposited at the two positions A1.

However, processor 140 has also identified that a second frame, frame X, has a greater number of non-error dispensers than frame Y (and in fact, frame X has no error dispensers). Thus, to avoid the drop deposition errors from using frame Y, prior to dispensing drops processor 140 displaces head system 210 sideways to the position shown in FIG. 4B in which frame X is aligned with the selected paths Aₛ through Eₛ. Processor 140 then activates the transport system such that frame X is moved along the selected paths while dispensing drops from dispenser Aₓ1 in part of the pattern for the for the selected path Aₛ of the group A (specifically, Aₓ1 replaces A_{y}1 and dispenses in the pattern A_{y}1 would have dispensed in if not in error). In fact, since frame X has no error dispensers, the dispensers in frame X will all be used to dispense in the complete pattern of the selected path Aₛ for group A. As in FIG. 4A two repetitions of dispensing from head system 210 may be performed to obtain the complete array as illustrate in FIG. 4B. By processor 140 moving the frame X along the selected paths Aₛ through Eₛ, after identifying the error in dispenser A_{y}1, rather than using the first frame Y, errors in the array are avoided which might require further passes of head 210 over the same region of the substrate to correct. Further, since dispensers of a same set in each group are loaded with the same fluid, re-loading of the head system is not required to compensate for dispenser errors. In a method of the present invention, this procedure (load, dispense drops to identify an error dispenser, move and dispense drops from non error dispensers) may be repeated multiple times during fabrication of an array (for example, after each time head system 210 is re-loaded with fluids).

The method illustrated in FIG. 4 represents the simple case where there are no error dispensers in all of the second frame X. However, in practice when it is desired to use a head system with a much larger number of rows, it is less likely that all dispensers in a frame will not have any errors. Operation of a method of the present invention in such a situation is illustrated in part in FIG. 5 using the same head system in FIG. 4. For simplicity, no deposition repetitions are illustrated in FIG. 5. In FIG. 5, after the head system has been loaded and drops dispensed from all the dispensers of the dispenser head so as to identify any errors, the following dispensers in frame Y have been identified as being in error: A_{y}1 B_{y}3, C_{y}2, D_{y}1, E_{y}1, and Ey3. Additionally, in FIG. 5 at least one or more dispensers in frame X has also been found to be in error so that it is not possible to use the method described in connection with FIG. 4. In this situation, as illustrated in FIG. 5, the first frame Y and second frame X are moved in turn along the selected paths Aₛ to Eₛ, while droplets are dispensed from non-error dispensers of one frame which are located in the same sets as error dispensers in the other frame, in different parts of the pattern for the selected paths Aₛ to Eₛ. In particular, in FIG. 5A the first rows frame Y is aligned with the selected paths Aₛ through Eₛ and moved from a start position along those paths with respect to the substrate while dispensing drops from non-error dispensers in frame Y in accordance with a part of the pattern for those groups, as illustrated in FIG. 5A. Head system 210 is then returned to the start position, displaced sidewayssuch that the second frame X is aligned with selected paths Aₛ through Eₛ. The second frame X is then again moved along selected paths Aₛ through Eₛ with respect to the substrate while dispensing drops from non-error dispensers in the second rows of the groups in accordance with a part of the pattern for those groups, as illustrated in FIG. 5B.

Note that in the methods of FIGS. 4 and 5, the columns of deposited droplets 1-4 are spaced closer together than the columns 1-4 of respective dispensers (the dispensed drop columns are "compressed" relative to the respective dispensers). This decrease in deposited drop spacing in a direction of travel of the head system, is readily obtained with pulse jet dispensers by processor 140 correctly timing dispenser actuation as head system 210 moves over the substrate. Such compression allows for arrays with deposited drop spacing as measured in the direction of head travel, to be independent of the spacing of the respective dispensers which deposited them.

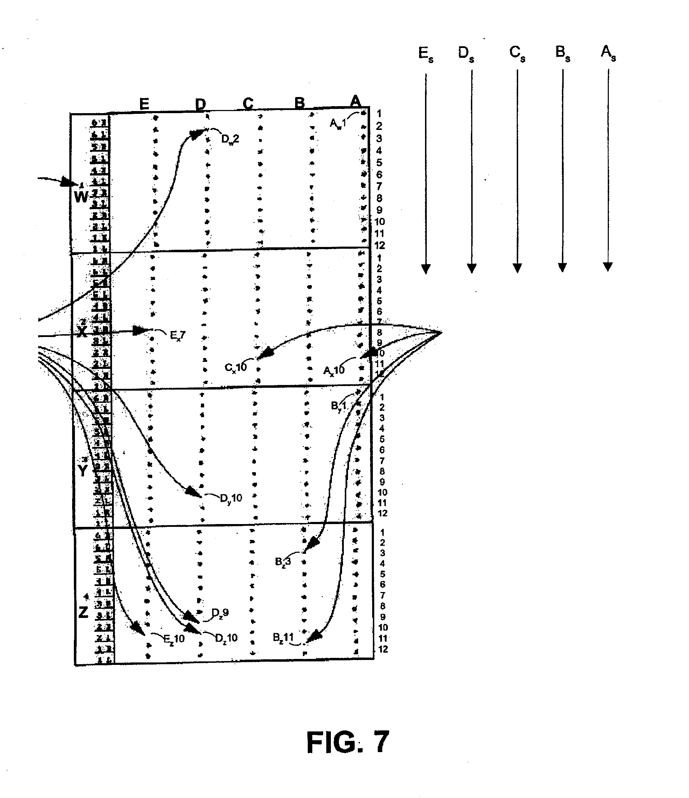

While in FIG. 5 only the first and second frames are used to complete the pattern for those groups, it will be appreciated that this concept can be extended to use other additional frames where further error dispensers are identified such that frames X and Y cannot complete the drop dispensing pattern for all groups. Such a method is illustrated in FIGS. 6 and 7. FIG. 6 illustrates a head system using the same nomenclature as in the previous FIGS. However, head system 210 in FIG. 6 has twelve dispenser sets within each group, each set having four dispensers. Thus, there are four frames W, X, Y, Z in the head system 210 of FIG. 6. In use, as in FIGS. 4 and 5, the dispensers of each set will be loaded with the same fluid. After each loading of the head system 210, and before dispensing drops for any of the arrays, drops may be dispensed in a test pattern to identify errors using any of those methods already described. Such test pattern will generally be located at a different region on the substrate 10 than the arrays 12, or may be located at a region not on substrate 10. When one or more error dispensers are detected in a first frame, then multiple selected frames are moved along the selected paths Aₛ to Eₛ (that is, one or more frames may be used in total) while dispensing drops from non-error dispensers of each frame in at least part of the selected paths.

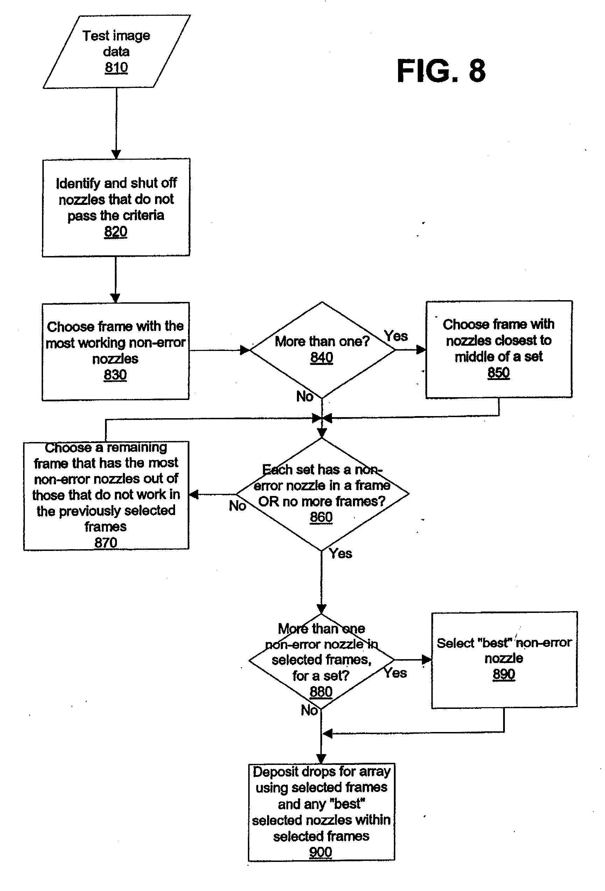

The selection of the frames which are used for drop dispensing may be further understood by reference to FIG. 7. The process may be controlled by processor 140 with optional operator intervention. First, head system 210 of FIG. 6 is loaded with fluids for dispensing in the fabrication of an array. Prior to dispensing any drops for the array head system 210 is used to dispense a test pattern. This can be readily done by processor 140 simultaneously activating the dispensers of each frame W, X, Y, and Z, with the head being displaced between the dispensing from each frame in a same direction (first direction) as the paths for the groups. This allows for rapid generation of a test pattern such as that of FIG. 7, in which the results of each frame are clearly separated. Errors in the dispensers are then identified as previously described to provide test image data (810 in FIG. 8). It will be appreciated that any discrepancy between a nominal dispenser parameter and an actual parameter, such as deviations in size (including absence), location, or shape, of a deposited drop may only be classified as an "error" if it meets or exceeds a predetermined threshold value. From FIG. 7, the following dispensers are identified as being in error:

**TABLE**

| FRAME | ERROR DISPENSERS |
|---|---|
| W | D_{w}2 |
| | |
| X | Eₓ7;Cₓ10;Aₓ10 |
| | |
| Y | D_{y}10 |
| | |
| Z | B_{z}3;B_{z}11;D_{z}9;D_{z}10; E_{z}10 |

Any dispensers which do not pass one or more criteria preselected by a user (or previously saved in a memory accessible to processor 140) relating to drop size (including presence at all), shape, or location, are error dispensers and are effectively "shut off' (820) (that is, they are not used). A frame with the most non-error dispensers is then chosen (830) from among the available frames. From the above Table, it can be seen that there is more than one such frame (840), namely frames W and Y (each having only one error dispenser). In such a situation, of those two frames, frame Y has dispensers which are closest to the middle of a set and is therefore chosen (850) as the selected first set. Note that the "middle" of a set should be the dispenser actually in the middle in the case of an odd number of dispensers per set, or an arbitrarily chosen one of the two dispensers in the middle of a set in the case of an even number of dispensers per set. In the present example, with only four dispensers per set as viewed in FIG. 6, the dispensers of frame Y have been arbitrarily chosen as the middle dispensers. It will be appreciated that any criteria other than middle dispensers, could be used for selecting a first set from among those frames which equally qualify as having the most non-error dispensers. All of the frames selected to this point may then be examined (860) to see if each set has a working dispenser in at least one frame. Since frame Y was selected as the first frame and it has an error dispenser D_{y}10, this is not true. Therefore, a frame is selected (870) from among remaining frames which has the highest number of non-error dispensers in sets not containing a non-error dispenser in previously selected frame. At this point, the previously non-selected frames are W, X, and Z. The sets not containing a non-error dispenser in previously selected frames consists only of the one set D_{w}10, Dₓ10, D_{y}10D_{z}10 (in which set, D_{y}10 is in error, as previously mentioned). The frame among W, X, Z which has the highest number of dispensers in that one set is both W and X. In this situation in which more than one frame has the highest number, then a frame is selected (not shown in FIG. 8) from among such highest number frames (W and X) which is again closest to the middle of the set. In the present example frame X is selected. The foregoing loop between 860 and 870 can then be repeated as often as needed until each set has a non-error dispenser in a selected frame or until there are no more frames left. If at this point there are no more frames left the procedure can be halted and an operator alert can be generated (not shown in FIG. 8) for speaker 314 or display 310 indicating this condition to allow the operator to replace or clean head system 210. In the present particular example, this is not the situation since after selection of frames Y and X each dispenser set has at least one non-error dispenser in one of those selected sets.

As mentioned above, in any of the foregoing situations rather than selecting a frame closest to the middle of the set from among those frames meeting the requirements, another one or more criterion may be used. For example, in choosing between frames W and Y in step (850) above, a criterion such as which frame has the greatest number of "best" nozzles could be used. After step (860) the choosing between frames W and X could be based on which has a best non-error dispenser in a set not containing a non-error dispenser in a previously selected frame (at this point, only the D10 set). In this example, this would be the best non-error dispenser from among D_{w}10 and Dₓ10. The "best" non-error dispenser more closely meets one or more predetermined criterion than a non-error dispenser. Such criteria can be pre-loaded into a memory 141 (see FIG. 9) or manually entered by an operator and may, for example, be based on any one or more of size, location, or shape of a deposited drop. For example, using this alternative criterion if it is assumed that D_{w}10 has a shape more circular than Dₓ10, then frame W is selected as a second selected frame. However, in cases where more than one frame still meets any chosen criterion or criteria, an arbitrary means can be used to pick between such frames (for example, in the case of two frames closest to the middle, such an arbitrary criterion may be to choose the frame which is to one selected side of the middle frame).

Next, the dispensers of the selected frames Y, X are examined to see if there is more than one non-error dispenser in the selected frames for any of the sets. From the Table above, it can be seen that many of the sets have non-error dispensers in frames Y or X. These include all of the A, B, C, E sets, as well as all of the D sets except D2 and D10. A best non-error dispenser is then selected (890) from among the Y and X frame dispensers in each of the foregoing sets using the pre-loaded into a memory 141 or manually entered by an operator criteria based on any one or more of size, location, or shape of a deposited drop, and the result stored in a memory (such as memory 141 in FIG. 9). Again, in the case where choosing in a step still results in more than one frame, an arbitrary criterion such as already discussed, can be applied to resolve the impasse. The head system 210 is then moved with the Y and X frames following, in turn, the selected paths Aₛ to Eₛ. Head system 210 may be displaced sidewaysto the direction of those paths between turns, to bring a selected frame into alignment with the selected paths Aₛ to E_{s.} Drops are dispensed from the selected best non-error dispensers in the Y or X frame while that frame is following the selected paths Aₛ to Eₛ.

Referring to FIG. 9 an apparatus of the present invention includes a substrate station 20 on which can be mounted a substrate 10. Pins or similar means (not shown) can be provided on substrate station 20 by which to approximately align substrate 10 to a nominal position thereon. Substrate station 20 can include a vacuum chuck connected to a suitable vacuum source (not shown) to retain a substrate 10 without exerting too much pressure thereon, since substrate 10 is often made of glass.

A dispensing head system 210 is retained by a head retainer 208. Head system 210 can be positioned at any position facing substrate 10 by means of a transport system. The transport system includes a carriage 62 connected to a first transporter 60 controlled by processor 140 through line 66, and a second transporter 100 controlled by processor 140 through line 106. Transporter 60 and carriage 62 are used to execute one axis positioning of station 20 (and hence mounted substrate 10) facing the dispensing head system 210, by moving it in the direction of nominal axis 63, while transporter 100 is used to provide adjustment of the position of head retainer 208 in a direction of nominal axis 204 (and hence move the rows of dispensers as described in connection with FIGS. 4 and 5). In this manner, head system 210 can be scanned line by line, by scanning along a line over substrate 10 in the direction of axis 204 using transporter 100 while substrate 10 is stationary, while line by line movement of substrate 10 in a direction of axis 63 is provided by transporter 60 while head system 210 is stationary. Head system 210 may also optionally be moved in a vertical direction 202, by another suitable transporter (not shown). However, it will be appreciated that other scanning configurations could be used. Also, it will be appreciated that both transporters 60 and 100, or either one of them, with suitable construction, could be used to perform the foregoing scanning of head system 210 with respect to substrate 10. Thus, when the present application refers to "positioning", "moving", or "displacing" or the like, one element (such as head system 210) in relation to another element (such as one of the stations 20 or substrate 10) it will be understood that any required moving can be accomplished by moving either element or a combination of both of them. An encoder 30 communicates with processor 140 to provide data on the exact location of substrate station 20 (and hence substrate 10 if positioned correctly on substrate station 20), while encoder 34 provides data on the exact location of holder 208 (and hence head system 210 if positioned correctly on holder 208). Any suitable encoder, such as an optical encoder, may be used which provides data on linear position. Angular positioning of substrate station 20 is provided by a transporter 120, which can rotate substrate station 20 about axis 202 under control of processor 140. Typically, substrate station 20 (and hence a mounted substrate) is rotated by transporter 120 under control of processor 140 in response to an observed angular position of substrate 10 as determined by processor 140 through viewing one or more fiducial marks on substrate 10 (particularly fiducial marks 18) with a camera (not shown). This rotation will continue until substrate 10 has reached a predetermined angular relationship with respect to dispensing head system 210. In the case of a square or rectangular substrate, the mounted substrate 10 will typically be rotated to align one edge (length or width) with the scan direction of head system 210 along axis 204.

Head system 210 may contain one or more (for example, two or three) heads mounted on the same head retainer 208. Each such head may be the same in construction as a head type commonly used in an ink jet type of printer. Each ejector is in the form of an electrical resistor operating as a heating element under control of processor 140 (although piezoelectric elements could be used instead). Each orifice with its associated ejector and portion of the chamber, defines a corresponding pulse jet with the orifice acting as a nozzle. It will be appreciated that head system 210 could have any desired number of pulse jets (for example, at least fifty or at least one hundred pulse jets). In this manner, application of a single electric pulse to an ejector causes a droplet to be dispensed from a corresponding orifice. Certain elements of each head can be adapted from parts of a commercially available thermal inkjet print head device available from Hewlett-Packard Co. as part no. HP51645A. One type of head and other suitable dispensing head designs are described in more detail in U.S. patent application entitled "A MULTIPLE RESERVOIR INK JET DEVICE FOR THE FABRICATION OF BIOMOLECULAR ARRAYS" Serial Number 09/150,507 filed September 9, 1998. However, other head system configurations can be used such as that described in U.S. Patent Application Serial No. 10/022088 titled "Multiple Inkjet Die, Multiple Reservoir Printhead Manufacturing Using Single Housing " by Daquino et al. filed Dec. 18, 2001 and owned by the assignee of the present application.

As is well known in the ink jet print art, the amount of fluid that is expelled in a single activation event of a pulse jet, can be controlled by changing one or more of a number of parameters, including the orifice diameter, the orifice length (thickness of the orifice member at the orifice), the size of the deposition chamber, and the size of the heating element, among others. The amount of fluid that is expelled during a single activation event is generally in the range about 0.1 to 1000 pL, usually about 0.5 to 500 pL and more usually about 1.0 to 250 pL. A typical velocity at which the fluid is expelled from the chamber is more than about 1 m/s, usually more than about 10 m/s, and may be as great as about 20 m/s or greater. As will be appreciated, if the orifice is in motion with respect to the receiving surface at the time an ejector is activated, the actual site of deposition of the material will not be the location that is at the moment of activation in a line-of-sight relation to the orifice, but will be a location that is predictable for the given distances and velocities.

The apparatus further includes a sensor in the form of a camera 304, to monitor dispensers for errors (such as failure to dispense droplets) by monitoring for drops dispensed onto substrate 10 when required of a dispenser. Camera 304 communicates with processor 140, and should have a resolution that provides a pixel size of about 1 to 100 micrometers and more typically about 4 to 20 micrometers or even 1 to 5 micrometers. Any suitable analog or digital image capture device (including a line by line scanner) can be used for such camera, although if an analog camera is used processor 140 should include a suitable analog/digital converter. A detailed arrangement and use of such a camera to monitor for dispenser errors, is described in US 6,232,072. Particular observations techniques are described, for example, in co-pending U.S. Patent Application Serial No. 09/302,898 filed April 30, 1999 by Caren et al., assigned to the same assignee as the present application, incorporated herein by reference. Alternatively, the sensor can be a drop detector which detects an electrical charge on a dispensed drop, in accordance with the apparatus and methods described in U.S. 09/558, 532 entitled "Array Fabrication with Drop Detection" filed by Christopher A. Schantz et al. Monitoring can occur during formation of an array and the information used during fabrication of the remainder of that array or another array, or test-print patterns can be run before array fabrication. A display 310, speaker 314, and operator input device 312, are further provided. Operator input device 312 may, for example, be a keyboard, mouse, or the like. Processor 140 has access to a memory 141, and controls print head system 210 (specifically, the activation of the ejectors therein), operation of the transport system, operation of each jet in print head system 210, capture and evaluation of images from the camera 304, and operation display 310 and speaker 314. Memory 141 may be any suitable device in which processor 140 can store and retrieve data, such as magnetic, optical, or solid state storage devices (including magnetic or optical disks or tape or RAM, or any other suitable device, either fixed or portable). Processor 140 may include a general purpose digital microprocessor suitably programmed from a computer readable medium carrying necessary program code, to execute all of the functions required of it as described below. It will be appreciated though, that when a "processor" such as processor 140 is referenced throughout this application, that such includes any hardware and/or software combination which will perform the required functions. Suitable programming can be provided remotely to processor 140, or previously saved in a computer program product such as memory 141 or some other portable or fixed computer readable storage medium using any of those devices mentioned below in connection with memory 141. For example, a magnetic or optical disk 324 may carry the programming, and can be read by disk reader 326.

Operation of the apparatus of FIG. 9 in accordance with a method of the present invention, will now be described. First, it will be assumed that memory 141 holds a target drive pattern. This target drive pattern is the instructions for driving the apparatus components as required to form the target array (which includes target locations and dimension for each spot) on substrate 10 and includes, for example, movement commands to transporters 60 and 100 as well as firing commands for each of the pulse jets in head system 210 co-ordinated with the movement of head system 210 and substrate 10, as well as instructions for which polynucleotide solution (or precursor) is to be loaded in each pulse jet (that is, the "loading pattern"). This target drive pattern is based upon the target array pattern and can have either been input from an appropriate source (such as input device 312, a portable magnetic or optical medium, or from a remote server, any of which communicate with processor 140), or may have been determined by processor 140 based upon an input target array pattern (using any of the appropriate sources previously mentioned) and the previously known nominal operating parameters of the apparatus. Further, it will be assumed that drops of different biomonomer or biopolymer containing fluids (or other fluids) have been placed at respective regions of a loading station (not shown). Operation of the following sequences are controlled by processor 140, following initial operator activation, unless a contrary indication appears.

For any given substrate 10, the operation is basically as follows: (i) determine a target drive pattern (if not already provided) to obtain target array pattern, based on nominal operating parameters and target polynucleotide array pattern; (ii) deposit a test pattern of drops from all the dispensers and evaluate the resulting data for error dispensers; (iii) if there is no error in one or more operating parameters then the apparatus is operated according to the target drive pattern; (iv) if there is an error in one or more dispensers then processor 140 derives, based on the error, a corrected drive pattern from the target pattern such that firing by error dispensers is replaced by firing from non-error dispensers in accordance with the methods already described above. The corrected drive is determined based on the frames and dispensers selected in accordance with a procedure described above. The target drive pattern may be saved in memory or just derived during the actual array fabrication and sent as instructions directly to the apparatus components. Drops are dispensed in accordance with this corrected drive pattern in coordination with movement of the head system 210 along the selected paths Aₛ to Eₛ. Head system 210 is then reloaded and the foregoing procedure repeated until all drops for the arrays are deposited.

A loading sequence for head system 210 is more completely described in US 6,323,043 and US 6,242,266, including the possibility of using a flexible microtitre plate as described in U.S. patent application "Method and Apparatus for Liquid Transfer", Serial No. 09/183,604. Those references and all other references cited in the present application, are incorporated into this application by reference. Processor 140 can control pressure within head system 210 to load each polynucleotide solution into the chambers in the head by drawing it through the orifices as described in one or more of the foregoing patents or applications.

Substrate 10 is then loaded onto substrate station 20, if not previously loaded, either manually by an operator, or optionally by a suitable automated driver (not shown) controlled, for example, by processor 140.

The deposition sequence is then initiated to deposit the desired arrays of polynucleotide containing fluid droplets on the substrate to provide drops on the substrate according to the target pattern each with respective feature locations and dimensions. As already mentioned, in this sequence processor 140 will operate the apparatus according to the target or corrected drive pattern, by causing the transport system to position head system 210 facing substrate station 20, and particularly the mounted substrate 10, and with head system 210 at an appropriate distance from substrate 10. Processor 140 then causes the transport system to scan head system 210 across substrate 10 line by line (or in some other desired pattern), while co-ordinating activation of the ejectors in head system 210 so as to dispense droplets as described above. If necessary or desired, processor 140 can repeat the load, dispense drops in test pattern, dispense drops in corrected drive pattern, one or more times until head system 210 has dispensed droplets in to obtain the target arrays 12 to be formed on substrate 10.

At this point the droplet dispensing sequence is complete.

Following receipt by a user of an array made by an apparatus or method of the present invention, it will typically be exposed to a sample (for example, a fluorescently labeled polynucleotide or protein containing sample) and the array then read. Reading of the array may be accomplished by illuminating the array and reading the location and intensity of the resulting fluorescence at each feature of the array. For example, a scanner may be used for this purpose which is similar to the AGILENT MICROARRAY SCANNER manufactured by Agilent Technologies, Palo Alto, CA. Other suitable apparatus and methods are described in U.S. patent applications: Serial No. 09/846125 "Reading Multi-Featured Arrays" by Dorsel et al.; and Serial No. 09/430214 "Interrogating Multi-Featured Arrays" by Dorsel et al. However, arrays may be read by any other method or apparatus than the foregoing, with other reading methods including other optical techniques (for example, detecting chemiluminescent or electroluminescent labels) or electrical techniques (where each feature is provided with an electrode to detect hybridization at that feature in a manner disclosed in US 6,251,685, US 6,221,583 and elsewhere). Results from the reading may be raw results (such as fluorescence intensity readings for each feature in one or more color channels) or may be processed results such as obtained by rejecting a reading for a feature which is below a predetermined threshold and/or forming conclusions based on the pattern read from the array (such as whether or not a particular target sequence may have been present in the sample, or whether or not a pattern indicates a particular condition of an organism from which the sample came). The results of the reading (processed or not) may be forwarded (such as by communication) to a remote location if desired, and received there for further use (such as further processing).

The present methods and apparatus may be used to deposit biopolymers or other chemical moieties on surfaces of any of a variety of different substrates, including both flexible and rigid substrates. Preferred materials provide physical support for the deposited material and endure the conditions of the deposition process and of any subsequent treatment or handling or processing that may be encountered in the use of the particular array. The array substrate may take any of a variety of configurations ranging from simple to complex. Thus, the substrate could have generally planar form, as for example a slide or plate configuration, such as a rectangular or square or disc. In many embodiments, the substrate will be shaped generally as a rectangular solid, having a length in the range about 4 mm to 1 m, usually about 4 mm to 600 mm, more usually about 4 mm to 400 mm; a width in the range about 4 mm to 1 m, usually about 4 mm to 500 mm and more usually about 4 mm to 400 mm; and a thickness in the range about 0.01 mm to 5.0 mm, usually from about 0.1 mm to 2 mm and more usually from about 0.2 to 1 mm. However, larger substrates can be used, particularly when such are cut after fabrication into smaller size substrates carrying a smaller total number of arrays 12.

In the present invention, any of a variety of geometries of arrays on a substrate 10 may be fabricated other than the rectilinear rows and columns of arrays 12 of FIG. 1. For example, arrays 12 can be arranged in a sequence of curvilinear rows across the substrate surface (for example, a sequence of concentric circles or semi-circles of spots), or in some other arrangement. Similarly, the pattern of features 16 may be varied from the rectilinear rows and columns of spots in FIG. 2 to include, for example, a sequence of curvilinear rows across the substrate surface (for example, a sequence of concentric circles or semi-circles of spots), or some other regular pattern. Even irregular arrangements are possible provided a user is provided with some means (for example, an accompanying description) of the location and an identifying characteristic of the features (either before or after exposure to a sample). In any such cases, the arrangement of dispensers in head system 210 may be altered accordingly. The configuration of the arrays and their features may be selected according to manufacturing, handling, and use considerations.

The substrates will typically be non-porous, and may be fabricated from any of a variety of materials. In certain embodiments, such as for example where production of binding pair arrays for use in research and related applications is desired, the materials from which the substrate may be fabricated should ideally exhibit a low level of nonspecific binding during hybridization events. In many situations, it will also be preferable to employ a material that is transparent to visible and/or UV light. For flexible substrates, materials of interest include: nylon, both modified and unmodified, nitrocellulose, polypropylene, and the like, where a nylon membrane, as well as derivatives thereof, may be particularly useful in this embodiment. For rigid substrates, specific materials of interest include: glass; fused silica; plastics (for example, polytetrafluoroethylene, polypropylene, polystyrene, polycarbonate, and blends thereof, and the like); metals (for example, gold, platinum, and the like).

The substrate surface onto which the polynucleotide compositions or other moieties are deposited may be smooth or substantially planar, or have irregularities, such as depressions or elevations. The surface may be modified with one or more different layers of compounds that serve to modify the properties of the surface in a desirable manner. Such modification layers, when present, will generally range in thickness from a monomolecular thickness to about 1 mm, usually from a monomolecular thickness to about 0.1 mm and more usually from a monomolecular thickness to about 0.001 mm. Modification layers of interest include: inorganic and organic layers such as metals, metal oxides, polymers, small organic molecules and the like. Polymeric layers of interest include layers of peptides, proteins, polynucleic acids or mimetics thereof (for example, peptide nucleic acids and the like); polysaccharides, phospholipids, polyurethanes, polyesters, polycarbonates, polyureas, polyamides, polyethyleneamines, polyarylene sulfides, polysiloxanes, polyimides, polyacetates, and the like, where the polymers may be hetero- or homopolymeric, and may or may not have separate functional moieties attached thereto (for example, conjugated).

Various further modifications to the particular embodiments described above are, of course, possible. Accordingly, the present invention is not limited to the particular embodiments described in detail above.

## Claims

1. A method of fabricating a chemical array 12 using:
a head system 210 with multiple groups of drop dispensers;
a transport system to move the head system with respect to a substrate 10;
a processor 140 to dispense droplets from dispensers during operation of the transport system, in a pattern along a selected path for each group;
the method comprising:
a) loading the dispensers with fluid such that each dispenser group has at least one set of redundant dispensers loaded with a same fluid;
b) dispensing drops from the dispensers to identify an error in one or more dispensers;
c) moving a first dispenser of each set in each group along the selected path for that group while dispensing drops from non-error first dispensers of the sets in at least part of the pattern along the selected path for each group;
d) moving a second dispenser of the sets in each group along the selected path for that group while dispensing drops from a non-error second dispenser of a set having an identified error first dispenser, in at least part of the pattern for the selected path of the first group; and
e) repeating (a) through (d) at least once;
wherein the array is fabricated.

2. A method as claimed in claim 1 wherein in step (d) drops are dispensed from each second dispenser of multiple groups in at least part of the pattern for the selected path of the same group.

3. A method as claimed in claim 2 wherein:
dispensers within a set of redundant dispensers communicate with a common reservoir for that set.

4. A method as claimed in any preceding claim wherein the dispensers are pulse jets.

5. A method as claimed in claim 2 wherein in (d) the drops are dispensed from at least one second dispenser of a set of redundant dispensers, in the complete pattern for the first dispenser of the same set.

6. An apparatus for fabricating a chemical array 12, comprising:
(a) a head system 210 with multiple groups of drop dispensers, each group having multiple drop dispensers;
(b) a transport system to move the head system with respect to a substrate 10;
(c) a processor 140 which:
i) loads the dispensers with fluid such that each dispenser group has at least one set of redundant dispensers loaded with a same fluid;
ii) dispenses drops from the dispensers to identify an error in one or more dispensers;
iii) moves a first dispenser of each set in each group along a selected path for that group while dispensing drops from non-error first dispensers of the sets in at least part of a pattern along the selected path for each group;
iv) moves a second dispenser of the sets in each group along the selected path for that group while dispensing drops from a non-error second dispenser of a set having an identified error first dispenser in at least part of the pattern for the selected path of the first group; and
v) repeats (i) through (iv) at least once;
such that the array is fabricated.

7. A computer program product for use with a chemical array 12 fabricating apparatus having:
a head system 210 with multiple groups of drop dispensers, each group having multiple drop dispensers;
a transport system to move the head system with respect to a substrate; and
a processor 140:
the computer program product comprising a computer readable storage medium having a computer program stored thereon which, when loaded into the processor, performs:
i) loading the dispensers with fluid such that each dispenser group has at least one set of redundant dispensers loaded with a same fluid;
ii) dispensing drops from the dispensers to identify an error in one or more dispensers;
iii) moving a first dispenser of each set in each group along a selected path for that group while dispensing drops from non-error first dispensers of the sets in at least part of a pattern along the selected path for each group;
iv) moving a second dispenser of the sets in each group along the selected path for that group while dispensing drops from a non-error second dispenser of a set having an identified error first dispenser in at least part of the pattern for the selected path of the first group; and
v) repeating (i) through (iv) at least once;
such that the array is fabricated.

8. A computer program product as claimed in claim 7 wherein the program moves the first and further dispenser frames in turn along the selected paths.

9. A computer program product as claimed in claim 7 or 8 wherein the program displaces the head system sideways to the selected paths to bring each further frame into alignment with the selected paths.

10. A method comprising,
reading an array obtained by means of a method as claimed in any of claims 1 to 5, following exposure of the array to a sample.

11. A method comprising forwarding data representing a result of a reading obtained by the method of claim 10.
